# EUROPEAN PATENT APPLICATION

(11) **EP 4 783 423 A1**
(43) Date of publication of application: **29.07.2026**
(21) Application number: 26151740.3
(22) Date of filing: 14.01.2026
(51) Int. Cl.: H02K 3/12, H02K 3/28, H02K 3/50

(54) **STATOR, ROTATING ELECTRIC MACHINE, AND VEHICLE**

(30) Priority: 28.01.2025 JP 2025012072
(71) Applicant: MAZDA MOTOR CORPORATION, Hiroshima 730-8670 (JP)
(72) Inventor: Rikuto, Sakamoto, Aki-gun, Hiroshima, 730-8670 (JP); Jun, Shimodaira, Aki-gun, Hiroshima, 730-8670 (JP); Kenji, Matsuki, Aki-gun, Hiroshima, 730-8670 (JP)
(74) Representative: Lorenz Seidler Gossel Part. mbB

(57) **Abstract**

A stator coil is configured with a plurality of segment coils. A plurality of joining portions which are formed by electrically joining end portions of the plurality of segment coils include a plurality of first joining portions included in a first layer L1 and a plurality of second joining portions included in a plurality of second layers L2. A first end portion as the end portion of the segment coil to serve as an end portion of the stator coil is included in the first layer L1. The conductive member extends in a radial direction and is electrically joined to the first end portion. When seen from an outer side in the radial direction, a joining portion of the first end portion and the conductive member is positioned, in a circumferential direction, between the second joining portions included in the second layer L2, which is positioned on the outer side in the radial direction relative to the first layer L1, among the plurality of second joining portions.

## Description

The present disclosure relates to a stator, a rotating electric machine, and a vehicle.

Japanese Patent No. 6685572discloses a stator of a rotating electric machine.

In the stator, into a plurality of slots arrayed in a circumferential direction of a core, a plurality of coil segments, each of which includes a pair of slot insertion portions each of which linearly extends, are inserted across the slots. The slot insertion portions which are each inserted into the slots form a plurality of layers in a radial direction of the core. A distal end portion, which protrudes from an end surface of the core, of each of the slot insertion portions is folded in the circumferential direction, and the distal end portions between neighboring layers are electrically joined together.

Further, in the above stator, a second distal end portion, which is positioned in a layer at one end among the plurality of layers and whose protruding length from the end surface of the core is longer than those of first distal end portions among distal end portions, which first distal end portions are joined to each other at their distal end portions, is arranged so as to be laid in a gap between joining portions of the distal end portions in the circumferential direction and is guided out to a side of the layer at another end among the plurality of layers.

In a stator of Patent Literature 1, a second distal end portion is bent by one twisting jig, together with a first distal end portion present in the same layer as the second distal end portion, later than the first distal end portion present in the same layer and is twisted so as to rise in a location corresponding to a gap (a gap between joining portions of distal end portions in a circumferential direction), and the second distal end portion is thereafter folded in a radial direction. In such a manner, because a complicated bending process is necessary, assembly of the stator is difficult.

The present disclosure has been made in consideration of such a matter, and an object thereof is to facilitate assembly of a stator.

### [Means for Solving the Problem]

The present disclosure relates to a stator, and the stator includes:
a stator core that is formed to surround a periphery of an axis line and is provided with a plurality of slots arrayed in a circumferential direction of the axis line;
a stator coil that is configured with a plurality of segment coils which are inserted into the plurality of slots and that is wound to have plural layers in a radial direction of the axis line; and
a conductive member,
the plurality of segment coils are each inserted into the plurality of slots, each end portion is electrically joined such that each of the plurality of segment coils is electrically connected in series,
a plurality of joining portions which are formed by electrically joining the end portions of the plurality of segment coils include a plurality of first joining portions included in a first layer, which is not a most exterior layer in the radial direction among the plural layers, and a plurality of second joining portions included in a plurality of second layers, which are remaining layers except the first layer among the plural layers,
a first end portion as the end portion of the segment coil to serve as an end portion of the stator coil among the plurality of segment coils is included in the first layer,
the conductive member extends in the radial direction from an outer side in the radial direction toward the first end portion and is electrically joined to the first end portion, and
when seen from the outer side in the radial direction, a joining portion of the first end portion and the conductive member is positioned, in the circumferential direction, between the second joining portions included in the second layer, which is positioned on the outer side in the radial direction relative to the first layer, among the plurality of second joining portions.

In the above configuration, the stator can be assembled without performing a complicated bending process. Accordingly, assembly of the stator can be facilitated.

In the stator, the first layer may be a most interior layer in the radial direction among the plural layers.

In the above configuration, because the stator can be assembled without performing such a complicated bending process that the end portion of the segment coil is folded from the most interior layer in the radial direction among the plural layers toward the outer side in the radial direction, assembly of the stator can be facilitated.

In the stator, the plurality of second joining portions may be radially arrayed from an inner side toward the outer side in the radial direction and may be arranged at equal intervals in the circumferential direction.

In the above configuration, the plurality of second joining portions are radially arrayed such that the plurality of second joining portions are provided at equal intervals in the circumferential direction, and joining (joining of the end portions of the segment coils) for forming the plurality of second joining portions can thereby be facilitated.

In the stator, the first end portion and the plurality of first joining portions, which are included in the first layer, may be arranged at equal intervals in the circumferential direction.

In the above configuration, the first end portion and the plurality of first joining portions are arranged at equal intervals, and securing of an insulation distance between the segment coils in the first layer can thereby be facilitated.

In the stator, a protruding height of the end portion of each of the plurality of segment coils may be the same as each other.

In the above configuration, the protruding heights of the end portions of the plurality of segment coils are set the same, and joining of the end portions of the segment coils can thereby be facilitated.

In the stator, the conductive member may have an extension portion, which extends in the radial direction from the outer side in the radial direction toward the first end portion, and a protrusion portion, which protrudes from a distal end of the extension portion in an axis direction of the axis line and is electrically joined to the first end portion, and a protruding height of the protrusion portion may be the same as a protruding height of the first end portion.

In the above configuration, the protrusion portion is provided in the conductive member, and joining of the first end portion and the conductive member can thereby be made strong.

In the stator, the conductive member may be arranged on an inner side, in an axis direction of the axis line, relative to the end portions of the plurality of segment coils.

In the above configuration, a length of the stator in the axis direction can be made shorter than a case where the conductive member is arranged on the outer side in the radial direction relative to the end portions of the plurality of segment coils (for example, a case of a stator in Patent Literature 1).

Further, the present disclosure relates to a rotating electric machine, and the rotating electric machine includes: the stator; and a rotor that is opposed to the stator in the radial direction with an air gap.

Further, the present disclosure relates to a vehicle, and the vehicle includes: the rotating electric machine; and a driving wheel to which motive power of the rotating electric machine is transmitted.

### [Advantageous Effect of Invention]

According to the present disclosure, assembly of a stator can be facilitated.

### Brief Description of Drawings:

FIG. 1 is a plan view illustrating, as an example, a configuration of a rotating electric machine according to an embodiment.
FIG. 2 is a side view illustrating, as an example, a configuration of a rotating electric machine of the embodiment.
FIG. 3 is a perspective view illustrating, as an example, a configuration of a stator of the embodiment.
FIG. 4 is a partial plan view illustrating, as an example, a configuration of a principal portion of the stator.
FIG. 5 is a partial perspective view illustrating, as an example, a configuration of the principal portion of the stator.
FIG. 6 is an outline diagram illustrating, as an example, a configuration of a segment coil.
FIG. 7 is a circuit diagram illustrating, as an example, an electrical connection state in the stator.
FIG. 8 is an outline diagram illustrating, as an example, a detailed configuration of a stator coil.
FIG. 9 is an outline diagram illustrating, as an example, a configuration of a vehicle including the rotating electric machine.
FIG. 10 is an outline diagram illustrating, as an example, a modification example of the segment coil.
FIG. 11 is a circuit diagram illustrating, as an example, a modification example of the electrical connection state in the stator.

Embodiments will hereinafter be described in detail with reference to drawings. Note that the same reference characters will be given to the same or corresponding portions in the drawings, and descriptions thereof will not be repeated. Further, the present disclosure is not limited to the embodiments described in the following, and various changes are possible without departing from the scope of the technical ideas of the present disclosure. Each of the drawings is for conceptually explaining the present disclosure and might thus express dimensions, ratios, or numbers by exaggerating or simplifying those as needed for easy understanding.

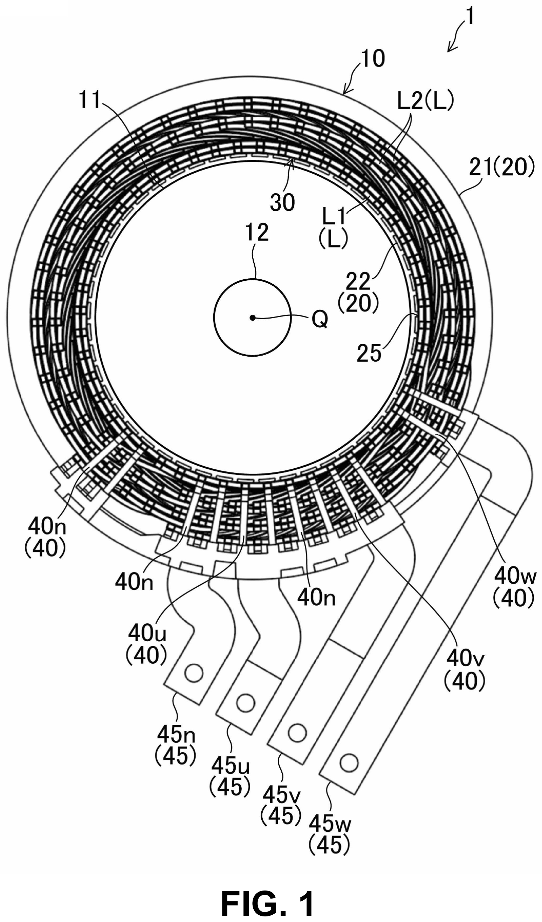

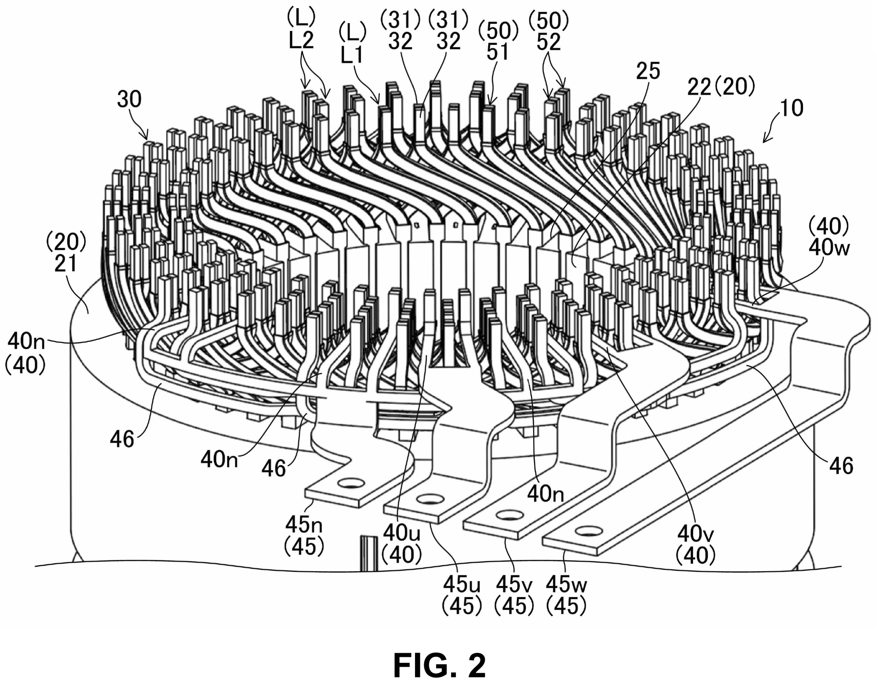

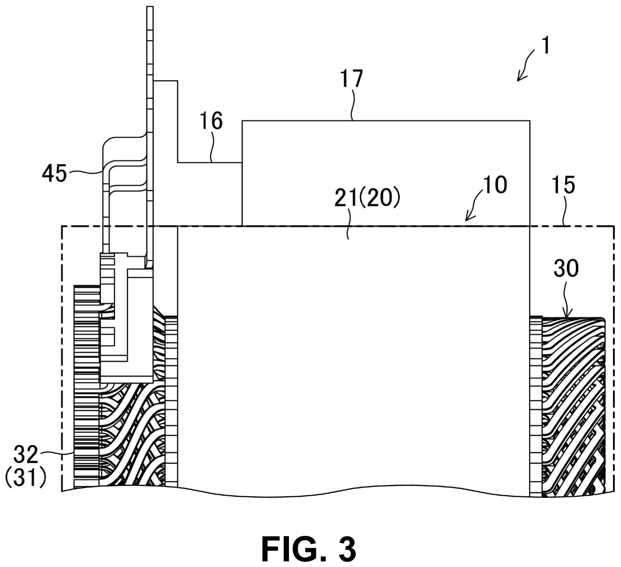

FIG. 1 and FIG. 2 illustrate, as an example, a configuration of a rotating electric machine 1 of the embodiment. In this example, the rotating electric machine 1 includes a stator 10, a rotor 11, a shaft 12, and a casing 15. In an outer periphery of the casing 15, a terminal block 16 and a driving device 17 are provided. In FIG. 3, in order that an internal portion of the casing 15 can be seen, the casing 15 is made transparent, and an external shape of the casing 15 is indicated by two-dot dash lines.

In the following description, a direction of an axis line Q will be denoted as an "axis direction", a direction orthogonal to the axis direction will be denoted as a "radial direction", and a direction along a circumference of the axis line Q will be denoted as a "circumferential direction". A side far from the axis line Q will be denoted as a "radial-direction outer side", and a side close to the axis line Q will be denoted as a "radial-direction inner side".

The rotor 11 is opposed to the stator 10 in the radial direction with a predetermined air gap. For example, the rotor 11 includes a rotor core and permanent magnets (not illustrated) incorporated in the rotor core. As a configuration of the rotor 11, a known configuration can be employed. The shaft 12 is inserted into and fixed to a shaft hole (not illustrated) which is formed in a central portion of the rotor 11.

The casing 15 houses configuration elements (components) of the rotating electric machine 1. In this example, the casing 15 houses the stator 10, the rotor 11, and the shaft 12. In the terminal block 16, a terminal is provided which is connected to stator coils 30 described later. The driving device 17 converts a power source voltage supplied from a commercial power supply into a desired alternating-current voltage and supplies the alternating-current voltage to the terminal (the terminal connected to the stator coils 30) which is provided in the terminal block. Accordingly, a rotating magnetic field is produced in the stator coils 30, and the rotor 11 rotates.

Next, the stator 10 will be described with reference to FIG. 1 to FIG. 5. The stator 10 includes the stator core 20, the stator coils 30, conductive members 40, and terminal members 45. In this example, the rotating electric machine 1 is a three-phase alternating-current motor, and the stator 10 includes the stator coils 30 of three phases (three kinds). Further, the stator 10 includes three conductive members 40 and three communication members 46 which correspond to the stator coils 30 of the three phases.

The stator core 20 is formed so as to surround a periphery of the axis line Q. In the stator core 20, a plurality of slots 25 are provided. The plurality of slots 25 are arrayed in the circumferential direction. In this example, the stator core 20 has a back yoke 21 which is formed into a cylindrical shape and a plurality of teeth 22 which protrude from the back yoke 21 to the radial-direction inner side. The plurality of slots 25 are formed between the plurality of teeth 22. For example, the stator core 20 is configured with a laminated core in which a plurality of thin plate materials formed with electromagnetic steel sheets are laminated in the axis direction.

The stator coil 30 is configured with a plurality of segment coils 31. Each of the plurality of segment coils 31 has a similar configuration to each other. Further, the stator coil 30 is wound so as to have plural layers L in the radial direction. In this example, the stator coil 30 is wounded around the plurality of teeth 22 by distributed winding.

The plurality of segment coils 31 are inserted into the plurality of slots 25. Further, as for the plurality of segment coils 31, each end portion 32 is electrically joined such that each of the plurality of segment coils 31 is electrically connected in series. In such a manner, the plurality of segment coils 31, which are inserted into the plurality of slots 25, are electrically connected in series, and the stator coil 30 is thereby configured.

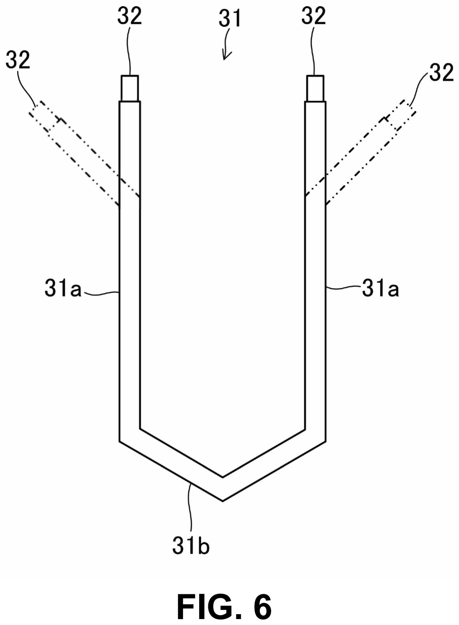

As illustrated in FIG. 6, in this example, the segment coil 31 is formed into a U shape. Specifically, the segment coil 31 has two insertion portions 31a and a coupling portion 31b. The two insertion portions 31a are each formed to extend linearly and are respectively inserted into two slots 25. The coupling portion 31b couples end portions of the two insertion portions 31a together. The segment coil 31 is configured with metal such as copper. Further, a remaining portion, except a distal end portion of the end portion 32, in the segment coil 31 is covered by an insulating film.

As illustrated in FIG. 1 to FIG. 5, in this example, the plurality of segment coils 31 are aligned in the circumferential direction so as to be each provided across the plurality of slots 25, and the end portions 32 are each inserted into the plurality of slots 25 from one end side in the axis direction and protrude on another end side in the axis direction. Furthermore, as indicated by two-dot dash lines in FIG. 6, the end portions 32 of the segment coil 31 which are inserted into the slots 25 are folded in the circumferential direction.

Furthermore, in this example, the end portions 32 of two segment coils 31 neighboring each other in the circumferential direction are welded together while being superimposed on each other in the radial direction, and the end portions 32 of the two segment coils 31 are electrically joined together.

In this example, a protruding height of the end portion 32 of each of the plurality of segment coils 31 (a position, in the axis direction, of a distal end of the end portion 32 folded in the circumferential direction) is the same as each other. Note that a state where "the protruding height of each of the plurality of segment coils 31 is the same as each other" includes not only a state where the protruding height of each of the plurality of segment coils 31 perfectly agrees with each other but also a state where dispersion amounts of the protruding heights of the plurality of segment coils 31 are equal to or smaller than a permissible amount (for example, an amount corresponding to a manufacturing error). In the following, the same applies to "the same".

Note that in the following description, the end portion 32 of the segment coil 31 to serve as an end portion of the stator coil 30 among the plurality of segment coils 31 will be denoted as a "first end portion 35" or a "second end portion 36". Specifically, the end portion 32 of the segment coil 31 to serve as one end portion of the stator coil 30 will be denoted as the "first end portion 35", and the end portion 32 of the segment coil 31 to serve as another end portion of the stator coil 30 will be denoted as the "second end portion 36".

The first end portion 35 and the second end portion 36 are included in a first layer L1 which is not a most exterior layer in the radial direction among the plural layers L of the stator coil 30. In this example, the first layer L1 is a most interior layer in the radial direction among the plural layers L of the stator coil 30.

The end portions 32 of the plurality of segment coils 31 are electrically joined together, and a plurality of joining portions 50 are thereby formed. The plurality of joining portions 50 include a plurality of first joining portions 51 and a plurality of second joining portions 52. The plurality of first joining portions 51 are included in the first layer L1. A plurality of second joining portions 52 are included in a plurality of second layers L2 as remaining layers, except the first layer L1, among the plural layers L.

In this example, the first end portion 35, the second end portion 36, and the plurality of first joining portions 51, which are included in the first layer L1, are arranged at equal intervals in the circumferential direction. A protruding height (a position in the axis direction) of each of the first end portion 35, the second end portion 36, and the plurality of first joining portions 51 is the same as each other. The plurality of second joining portions 52 included in the plurality of second layers L2 are radially arrayed from the inner side toward the outer side in the radial direction and are arranged at equal intervals in the circumferential direction. A protruding height (a position in the axis direction) of each of the plurality of second joining portions 52 is the same as each other and is also the same as the protruding height of each of the first end portion 35, the second end portion 36, and the plurality of first joining portions 51.

The conductive member 40 is a member for electrically connecting the stator coil 30 and the terminal member 45 together. The terminal member 45 is electrically connected to a terminal (not illustrated) provided in the terminal block 16. An alternating-current supplied to the terminal provided in the terminal block 16 is supplied to the stator coil 30 while sequentially passing via the terminal member 45 and the conductive member 40. The communication member 46 is a member which configures a part of the stator coil 30. The conductive member 40, the terminal member 45, and the communication member 46 are configured with metal such as copper.

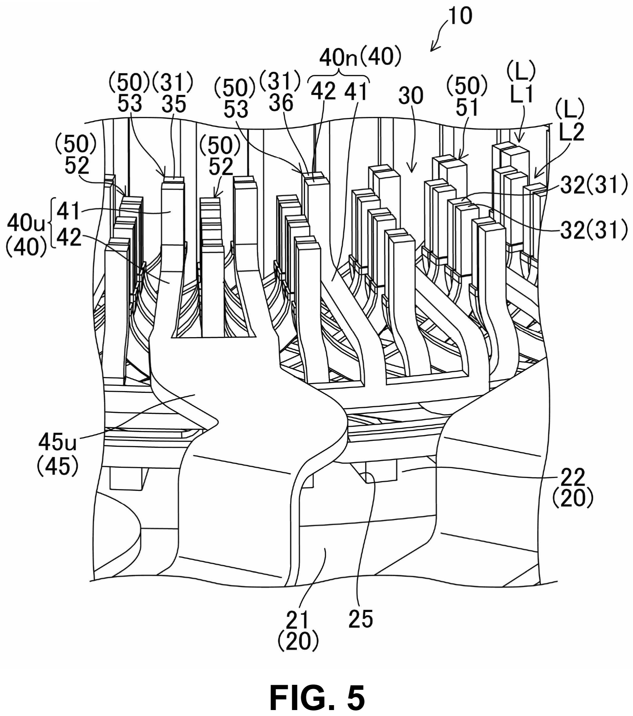

As illustrated in FIG. 5, the conductive member 40 extends in the radial direction from the outer side in the radial direction toward the first end portion 35 and is electrically joined to the first end portion 35. In this example, the conductive member 40 has an extension portion 41 and a protrusion portion 42. The extension portion 41 extends in the radial direction from the outer side in the radial direction toward the first end portion 35. The protrusion portion 42 protrudes from a distal end of the extension portion 41 in the axis direction (to the other end side in the axis direction in this example) and is electrically joined to the first end portion 35. A protruding height of the protrusion portion 42 is the same as the protruding height of the first end portion 35. In other words, a protruding direction of the protrusion portion 42 (a direction in which the protrusion portion 42 protrudes from the distal end of the extension portion 41) is a direction along a protruding direction of the first end portion 35 (a direction in which the first end portion 35 protrudes from the slot 25), and a position of the protrusion portion 42 in the axis direction is the same as a position of the first end portion 35 in the axis direction.

Further, in this example, the conductive member 40 is arranged on an inner side in the axis direction relative to the end portions 32 of the plurality of segment coils 31. Further, the conductive member 40 includes the conductive member 40 which is electrically joined to the first end portion 35 (the above-described conductive member 40) and the conductive member 40 which is electrically joined to the second end portion 36. A configuration of the conductive member 40 which is electrically joined to the second end portion 36 is similar to a configuration of the conductive member 40 which is electrically joined to the first end portion 35.

Note that in this example, n segment coils 31 which configure the stator coil 30 are categorized into m (m is an integer smaller than n) segment coils 31 which are electrically connected in series and n - m segment coils 31 which are electrically connected in series. For example, the m segment coils 31 correspond to a part of the stator coil 30 which is routed from an innermost layer (the most interior layer in the radial direction) among the plural layers L toward an outermost layer (the most exterior layer in the radial direction), and the n - m segment coils 31 correspond to a remaining part of the stator coil 30 which is routed from the outermost layer toward the innermost layer among the plural layer L.

The communication member 46 is a member for electrically connecting the part of the stator coil 30 and the remaining part of the stator coil 30 together. Specifically, one end portion of the communication member 46 is electrically joined to the end portion 32 (hereinafter denoted as a "third end portion") of the segment coil 31 to serve as the end portion (in this example, the end portion which is not the first end portion 35) in the part of the stator coil 30. Another end portion of the communication member 46 is electrically joined to the end portion 32 (hereinafter denoted as a "fourth end portion") of the segment coil 31 to serve as the end portion (in this example, the end portion which is not the second end portion 36) in the remaining part of the stator coil 30. In this example, the third end portion and the fourth end portion are included in the most exterior layer (outermost layer) in the radial direction among the plural layers L of the stator coil 30.

The first end portion 35 included in the first layer L1 and the conductive member 40 are electrically joined together, and a joining portion is thereby formed. Similarly, the second end portion 36 included in the first layer L1 and the conductive member 40 are electrically joined together, and a joining portion is thereby formed. In the following, those joining portions will be denoted as "first-layer joining portions 53".

As illustrated in FIG. 5, when seen from the outer side in the radial direction, the first-layer joining portion 53 as the joining portion of the first end portion 35 and the conductive member 40 is positioned, in the circumferential direction, between the second joining portions 52 (a plurality of second joining portions 52) included in the second layer L2 (one or more second layers L2), which is positioned on the outer side in the radial direction relative to the first layer L1, among the plurality of second joining portions 52. Similarly, the first-layer joining portion 53 as the joining portion of the second end portion 36 and the conductive member 40 is positioned, in the circumferential direction, between the second joining portions 52 included in the second layer L2 which is positioned on the outer side in the radial direction relative to the first layer L1 among the plurality of second joining portions 52. In this example, a protruding height (a position in the axis direction) of the first-layer joining portion 53 is the same as the protruding height of each of the plurality of first joining portions 51. The first-layer joining portion 53 and the plurality of first joining portions 51 are arranged at equal intervals in the circumferential direction.

The third end portion included in the outermost layer and the communication member 46 are electrically joined together, and a joining portion is thereby formed. Similarly, the fourth end portion included in the outermost layer and the communication member 46 are electrically joined together, and a joining portion is thereby formed. In the following, those joining portions will be denoted as "outermost-layer joining portions 54".

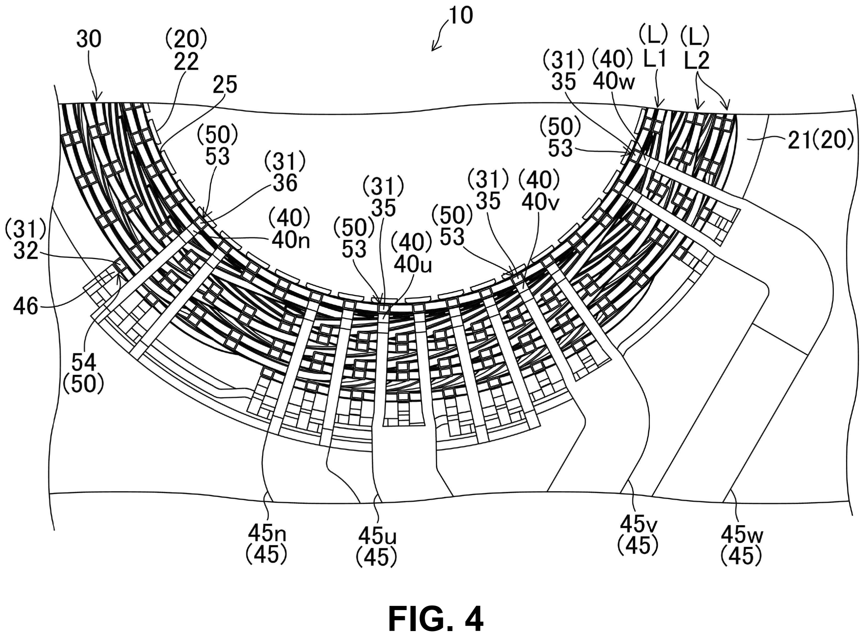

As illustrated in FIG. 4, the outermost-layer joining portion 54 as the joining portion of the third end portion and the communication member 46 is arranged on the outer side in the radial direction relative to the plurality of second joining portions 52. Similarly, the outermost-layer joining portion 54 (not illustrated) as the joining portion of the fourth end portion and the communication member 46 is arranged on the outer side in the radial direction relative to the plurality of second joining portions 52. In this example, a protruding height (a position in the axis direction) of the outermost-layer joining portion 54 is the same as the protruding height of each of the plurality of second joining portions 52. The outermost-layer joining portion 54 and the plurality of second joining portions 52 are radially arrayed from the inner side toward the outer side in the radial direction and are arranged at equal intervals in the circumferential direction.

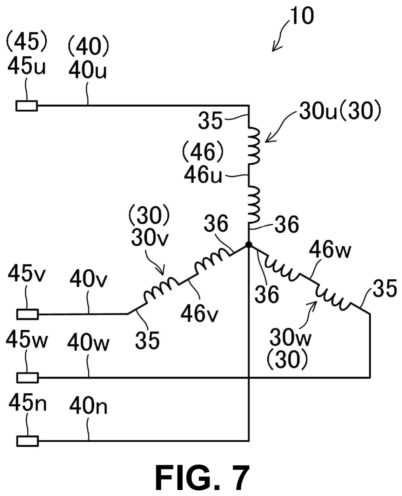

Next, an electrical connection state in the stator will be described with reference to FIG. 7. In this example, the stator 10 is provided with: a stator coil 30u of a U phase, a stator coil 30v of a V phase, and a stator coil 30w of a W phase; a conductive member 40u of the U phase, a conductive member 40v of the V phase, a conductive member 40w of the W phase, and a conductive member 40n of a neutral point; and a terminal member 45u of the U phase, a terminal member 45v of the V phase, a terminal member 45w of the W phase, and a terminal member 45n of the neutral point. Further, the stator 10 is provided with a communication member 46u of the U phase, a communication member 46v of the V phase, and a communication member 46w of the W phase.

The communication member 46u of the U phase, the communication member 46v of the V phase, and the communication member 46w of the W phase are respectively incorporated in the stator coil 30u of the U phase, the stator coil 30v of the V phase, and the stator coil 30w of the W phase.

The conductive member 40u of the U phase, the conductive member 40v of the V phase, and the conductive member 40w of the W phase respectively electrically connect the first end portion 35 of the stator coil 30u of the U phase, the first end portion 35 of the stator coil 30v of the V phase, and the first end portion 35 of the stator coil 30w of the phase W to the terminal member 45u of the U phase, the terminal member 45v of the V phase, and the terminal member 45w of the W phase. The conductive member 40n of the neutral point electrically connects the second end portion 36 of each of the stator coil 30u of the U phase, the stator coil 30v of the V phase, and the stator coil 30w of the W phase to the terminal member 45n of the neutral point.

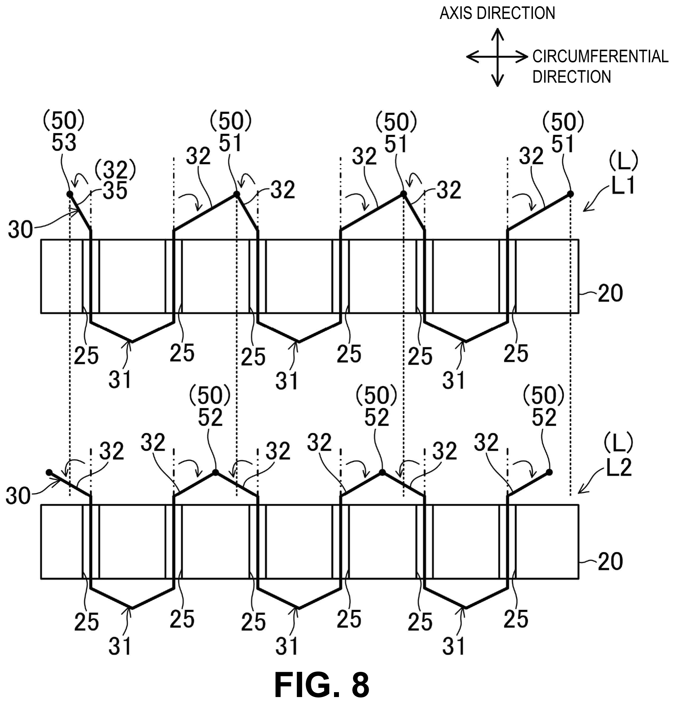

Next, a detailed configuration of the stator coil 30 will be described with reference to FIG. 8. As illustrated in FIG. 8, in this example, kinds of the segment coil 31 included in the first layer L1 and the segment coil 31 included in the second layer L2 are different from each other. Specifically, the segment coil 31 included in the first layer L1 is a segment coil in which lengths of the two end portions 32 are different. The segment coil 31 included in the second layer L2 is a segment coil in which the lengths of the two end portions 32 are the same. That is, the length (the length of a portion which protrudes from the slot 25 in the axis direction) of the end portion 32 of the segment coil 31 included in the first layer L1 is different from the length of the end portion 32 of the segment coil 31 included in the second layer L2.

In such a configuration, a position of a portion (a portion to become the first joining portion 51), in which the end portions 32 of the segment coils 31 overlap each other when the end portions 32 of the segment coils 31 included in the first layer L1 are folded in the circumferential direction, can be made different from a position of a portion (a portion to become the second joining portion 52), in which the end portions 32 of the segment coils 31 overlap each other when the end portions 32 of the segment coils 31 included in the second layer L2 are folded in the circumferential direction.

As described above, in the rotating electric machine 1 of the embodiment, the first end portion 35 as the end portion 32 of the segment coil 31 to serve as the end portion of the stator coil 30 among the plurality of segment coils 31 is included in the first layer L1. The conductive member 40 extends in the radial direction from the outer side in the radial direction toward the first end portion 35 and is electrically joined to the first end portion 35. When seen from the outer side in the radial direction, the first-layer joining portion 53 as the joining portion of the first end portion 35 and the conductive member 40 is positioned, in the circumferential direction, between the second joining portions 52 (the plurality of second joining portions 52) included in the second layer L2 (one or more second layers L2), which is positioned on the outer side in the radial direction relative to the first layer L1, among the plurality of second joining portions 52.

In the above configuration, the stator 10 can be assembled without performing a complicated bending process (for example, a bending process as in Patent Literature 1). Accordingly, assembly of the stator 10 can be facilitated.

Further, in the rotating electric machine 1 of the embodiment, the first layer L1 is the most interior layer in the radial direction among the plural layers L of the stator coil 30.

In the above configuration, because the stator 10 can be assembled without performing such a complicated bending process that the end portion 32 of the segment coil 31 is folded from the most interior layer in the radial direction among the plural layers L of the stator coil 30 toward the outer side in the radial direction, assembly of the stator 10 can be facilitated.

Further, in the rotating electric machine 1 of the embodiment, the plurality of second joining portions 52 are radially arrayed from the inner side toward the outer side in the radial direction and are arranged at equal intervals in the circumferential direction.

In the above configuration, the plurality of second joining portions 52 are radially arrayed such that the plurality of second joining portions 52 are provided at equal intervals in the circumferential direction, and joining (joining of the end portions 32 of the segment coils 31) for forming the plurality of second joining portions 52 can thereby be facilitated.

Further, in the rotating electric machine 1 of the embodiment, the first end portion 35 and the plurality of first joining portions 51, which are included in the first layer L1, are arranged at equal intervals in the circumferential direction.

In the above configuration, the first end portion 35 and the plurality of first joining portions 51, which are included in the first layer L1, are arranged at equal intervals, and securing of an insulation distance between the segment coils 31 in the first layer L1 can thereby be facilitated.

Further, in the rotating electric machine 1 of the embodiment, the protruding height of the end portion 32 of each of the plurality of segment coils 31 is the same as each other.

In the above configuration, the protruding heights of the end portions 32 of the plurality of segment coils 31 are set the same, and joining of the end portions 32 of the segment coils 31 can thereby be facilitated.

Further, in the rotating electric machine 1 of the embodiment, the conductive member 40 has the extension portion 41, which extends in the radial direction from the outer side in the radial direction toward the first end portion 35, and the protrusion portion 42, which protrudes from the distal end of the extension portion 41 to the other end side in the axis direction and is electrically joined to the first end portion 35. The protruding height of the protrusion portion 42 is the same as the protruding height of the first end portion 35.

In the above configuration, the protrusion portion 42 is provided in the conductive member 40, and joining of the first end portion 35 and the conductive member 40 can thereby be made strong.

Further, in the rotating electric machine 1 of the embodiment, the conductive member 40 is arranged on the inner side in the axis direction relative to the end portions 32 of the plurality of segment coils 31.

In the above configuration, a length of the stator 10 in the axis direction can be made shorter than a case where the conductive member 40 is arranged on the outer side in the radial direction relative to the end portions 32 of the plurality of segment coils 31 (for example, a case of a stator in Patent Literature 1).

### (Vehicle)

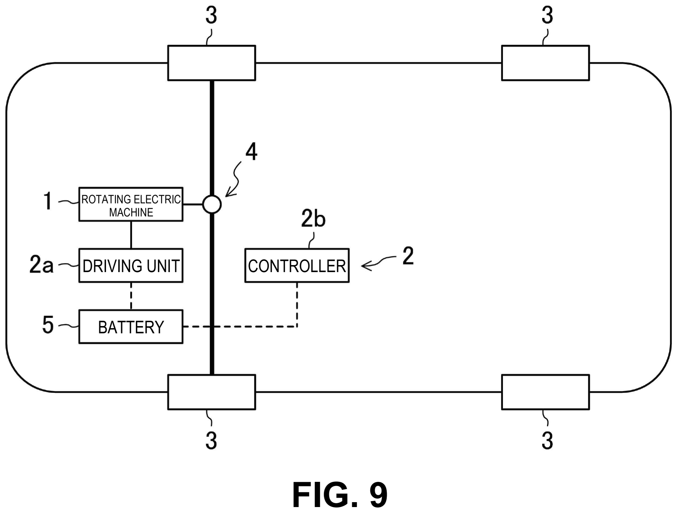

FIG. 9 illustrates, as an example, a configuration of a vehicle including the rotating electric machine 1. The vehicle includes the rotating electric machine 1, a control device 2, driving wheels 3, a motive power transmission mechanism 4, and a battery 5.

The control device 2 controls the rotating electric machine 1. The control device 2 has a driving unit 2a and a controller 2b. The driving unit 2a supplies electric power to the rotating electric machine 1 and thereby drives the rotating electric machine 1. For example, the driving unit 2a is the driving device 17. The controller 2b controls the driving unit 2a and thereby controls an action of the rotating electric machine 1.

The motive power transmission mechanism 4 transmits motive power of the rotating electric machine 1 to the driving wheels 3. In such a manner, the motive power of the rotating electric machine 1 is transmitted to the driving wheels 3. The battery 5 supplies electric power to the driving unit 2a and the controller 2b.

As for the above descriptions, the following configurations and processes are also possible.

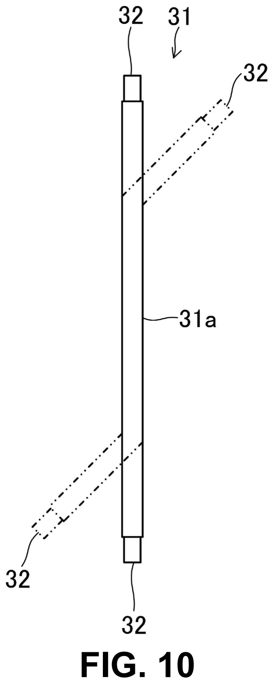

The segment coil 31 is not limited to the U shape. For example, as illustrated in FIG. 10, the segment coil 31 may be formed to extend linearly. In this case, as indicated by two-dot dash lines in FIG. 10, the end portions 32 of the segment coil 31 which is inserted into the slot 25 are folded in the circumferential direction. In a case where the segment coil 31 is formed in such a manner, the plurality of segment coils 31, which are inserted into the plurality of slots 25, are electrically connected in series as well, and the stator coil 30 is thereby configured.

The first layer L1 is not limited to the most interior layer in the radial direction among the plural layers L. The first layer L1 may be a second or subsequent layer from the inner side in the radial direction among the plural layers L.

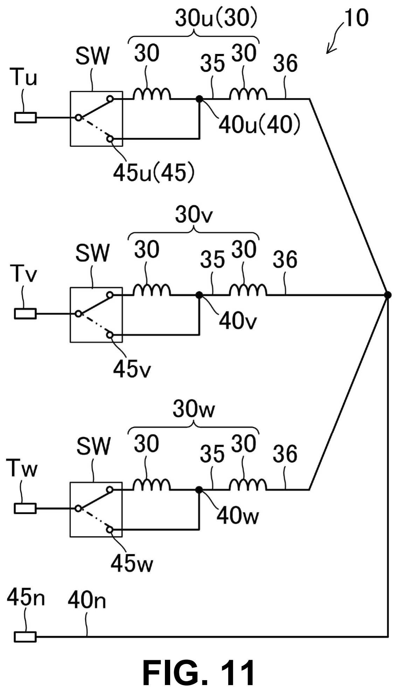

As illustrated in FIG. 11, a stator coil of one phase (for example, the stator coil 30u of the U phase) may be configured with a plurality of stator coils 30 which are electrically connected in series. In this case, the above "end portion of the stator coil 30" may be a connection point of the plurality of stator coils 30 which configure the stator coil of one phase (an intermediate point of the stator coil of one phase). Further, the above "first end portion 35 as the end portion 32 of the segment coil 31 to serve as the end portion of the stator coil 30" may be the end portion of the segment coil 31 to serve as the connection point of the plurality of stator coils 30 which configure the stator coil of one phase (the intermediate point of the stator coil of one phase). The same applies to the above "second end portion 36".

FIG. 11 illustrates, as an example, an electrical connection state in the stator 10 of the rotating electric machine 1 having a winding wire switching mechanism. In an example in FIG. 11, two stator coils 30 which configure the stator coil 30u of the U phase are arranged between the neutral point and a switch SW. In the following, one stator coil 30 to be connected to the "neutral point" between the two stator coils 30 will be denoted as a "first stator coil 30", and the other stator coil 30 will be denoted as a "second stator coil 30". A connection point of the first stator coil 30 and the second stator coil 30 corresponds to the intermediate point of the stator coil 30u of the U phase.

In the stator coil 30u of the U phase, by the conductive member 40u of the U phase, the first end portion 35 of the first stator coil 30 is electrically connected to the terminal member 45u of the U phase and one end portion of the second stator coil 30. In other words, a connection point of the first end portion 35 of the first stator coil 30 and one end portion of the second stator coil 30 is electrically connected to the terminal member 45u of the U phase by the conductive member 40u of the U phase. The second end portion 36 of the first stator coil 30 is electrically connected to the neutral point. The switch SW electrically connects a terminal Tu of the U phase, to which an alternating-current voltage (an alternating-current voltage of the U phase) output from the driving device 17 is supplied, to either one of another end portion of the second stator coil 30 and the terminal member 45u of the U phase.

Note that configurations of the stator coil 30v of the V phase and the stator coil 30w of the W phase are similar to a configuration of the stator coil 30u of the U phase. Configurations related to the stator coil 30v of the V phase and the stator coil 30w of the W phase are similar to a configuration related to the stator coil 30u of the U phase. Specifically, the configuration related to the stator coil 30v of the V phase will become a configuration in which the "U phase" is replaced by the "V phase" in the configuration related to the stator coil 30u of the U phase. The configuration related to the stator coil 30w of the W phase will become a configuration in which the "U phase" is replaced by the "W phase" in the configuration related to the stator coil 30u of the U phase.

A case where the rotating electric machine 1 is provided in the vehicle is raised as an example, but this is not restrictive. For example, the rotating electric machine 1 may be provided in a refrigerator, a washing machine, a drying machine, and so forth.

Further, the above embodiments may be carried out while being appropriately combined. The above embodiments are inherently preferable examples and are not intended to restrict the scope of the present disclosure, applications thereof, or usages thereof.

Further, denotation of "first", "second", "third", ... in the specification and claims is used in order to distinguish words to which the denotation is given and does not limit the number or order of the words.

As described in the foregoing, the present disclosure is useful as a stator, a rotating electric machine, and a vehicle.
- 1: rotating electric machine
- 2: control device
- 3: driving wheel
- 4: motive power transmission mechanism
- 5: battery
- 10: stator
- 11: rotor
- 12: shaft
- 15: casing
- 16: terminal block
- 17: driving device
- 20: stator core
- 21: back yoke
- 22: tooth
- 25: slot
- 30: stator coil
- 31: segment coil
- 32: end portion of segment coil
- 35: first end portion
- 36: second end portion
- 40: conductive member
- 41: extension portion
- 42: protrusion portion
- 45: terminal member
- 46: communication member
- 50: joining portion
- 51: first joining portion
- 52: second joining portion
- 53: first-layer joining portion
- 54: outermost-layer joining portion
- L: layer
- L1: first layer
- L2: second layer

## Claims

1. A stator (10) comprising:
a stator core (20) that is formed to surround a periphery of an axis line (Q) and is provided with a plurality of slots (25) arrayed in a circumferential direction of the axis line (Q);
a stator coil (30) that is configured with a plurality of segment coils (31) which are inserted into the plurality of slots (25) and that is wound to have plural layers (L) in a radial direction of the axis line (Q); and
a conductive member (40), wherein
the plurality of segment coils (31) are each inserted into the plurality of slots (25), each end portion (32) is electrically joined such that each of the plurality of segment coils (31) is electrically connected in series,
a plurality of joining portions (50) which are formed by electrically joining the end portions (32) of the plurality of segment coils (31) include a plurality of first joining portions (51) included in a first layer (L1), which is not a most exterior layer in the radial direction among the plural layers (L), and a plurality of second joining portions (52) included in a plurality of second layers (L2), which are remaining layers except the first layer (L1) among the plural layers (L),
a first end portion (35) as the end portion (32) of the segment coil (31) to serve as an end portion of the stator coil (30) among the plurality of segment coils (31) is included in the first layer (L1),
the conductive member (40) extends in the radial direction from an outer side in the radial direction toward the first end portion (35) and is electrically joined to the first end portion (35), and
when seen from the outer side in the radial direction, a joining portion (53) of the first end portion (35) and the conductive member (40) is positioned, in the circumferential direction, between the second joining portions (52) included in the second layer (L2), which is positioned on the outer side in the radial direction relative to the first layer (L1), among the plurality of second joining portions (52).

2. The stator (10) according to claim 1, wherein
the first layer (L1) is a most interior layer in the radial direction among the plural layers (L).

3. The stator (10) according to claim 1 or 2, wherein
the plurality of second joining portions (52) are radially arrayed from an inner side toward the outer side in the radial direction and are arranged at equal intervals in the circumferential direction.

4. The stator (10) according to any one of claims 1 to 3, wherein
the first end portion (35) and the plurality of first joining portions (51), which are included in the first layer (L1), are arranged at equal intervals in the circumferential direction.

5. The stator (10) according to any one of claims 1 to 4, wherein
a protruding height of the end portion (32) of each of the plurality of segment coils (31) is same as each other.

6. The stator (10) according to any one of claims 1 to 5, wherein
the conductive member (40) has an extension portion (41), which extends in the radial direction from the outer side in the radial direction toward the first end portion (35), and a protrusion portion (42), which protrudes from a distal end of the extension portion (41) in an axis direction of the axis line (Q) and is electrically joined to the first end portion (35), and
a protruding height of the protrusion portion (42) is same as a protruding height of the first end portion (35).

7. The stator (10) according to any one of claims 1 to 6, wherein
the conductive member (40) is arranged on an inner side, in an axis direction of the axis line (Q), relative to the end portions (32) of the plurality of segment coils (31).

8. A rotating electric machine (1) comprising:
the stator (10) according to any one of claims 1 to 7; and
a rotor (11) that is opposed to the stator (10) in the radial direction with an air gap.

9. A vehicle comprising:
the rotating electric machine (1) according to any onr of claims 1 to 8; and
a driving wheel (3) to which motive power of the rotating electric machine (1) is transmitted.
